# EUROPÄISCHE PATENTSCHRIFT

(11) **EP 0 998 831 B1**
(45) Veröffentlichungstag und Bekanntmachung des Hinweises auf die Patenterteilung: **29.08.2007**
(21) Anmeldenummer: 98943683.7
(22) Anmeldetag: 13.07.1998
(51) Int. Cl.: H04Q 7/22, H04Q 3/00

(54) **VERFAHREN UND MOBILFUNKNETZ ZUR VERGEBÜHRUNG VON ANRUFEN**
METHOD AND MOBILE RADIO TELEPHONE NETWORK FOR ASSESSING CHARGES ON CALLS
PROCEDE ET RESEAU DE SERVICES RADIOTELEPHONIQUES MOBILES POUR LA TAXATION DES COMMUNICATIONS

(30) Priorität: 22.07.1997 DE 19731461; 22.07.1997 DE 19731463
(43) Veröffentlichungstag der Anmeldung: 10.05.2000
(60) Teilanmeldung: 05077302.7
(73) Patentinhaber: O2 (Germany) GmbH & Co. OHG, 80992 München (DE)
(72) Erfinder: FREYER, Bernd, D-82008 Unterhaching (DE)
(74) Vertreter: Herrmann, Uwe
(86) Internationale Anmeldenummer: PCT/DE1998/001958
(87) Internationale Veröffentlichungsnummer: WO 1999/005875

(56) Entgegenhaltungen:
- EP-A- 0 597 638
- EP-A- 0 734 144
- WO-A-94/28670
- WO-A-96/20571
- WO-A-97/08884
- WO-A-97/13387
- WO-A-97/23081
- WO-A-98/42151

## Beschreibung

Die Erfindung betrifft ein Verfahren zur Vergebührung von Anrufen in einem Mobilfunknetz mit einer aus Funkzellen aufgebauten zellularen Struktur gemäß dem Oberbegriff des Patentanspruchs 1.

Bekanntlich haben Mobilfunknetze, wie beispielsweise die nach dem GSM-Standard (Global System for Mobile Communication), eine zellulare Netzstruktur, bestehend aus einer Mehrzahl vor Funkzellen als kleinste Funkversorgungsbereiche. Dabei können mehrere Funkzellen zu Aufenthaltsgebieten zusammengefasst sein, deren Größe vom Netzbetreiber abhängig von den durch Verkehrsdichte und -fluss, Bevölkerungsdichte und Teilnehmermobilität gestellten Anforderungen auch unterschiedlich festlegbar ist. Der Netzbetreiber gibt eine Funknetzplanung vor, die Struktur, Anordnung und Anzahl der Funkzellen und Aufenthaltsgebiete enthält. Des weiteren ist bekannt, dass ein Mobilfunknetz mit zellularer Netzstruktur funktechnische Einrichtungen zum Senden/ Empfangen von Signalisierungs- und/oder Nutzinformationen zu/ von den Mcbilstationen sowie vermittlungstechnische Einrichtungen zum Durchschalten von Signalisierungs- und/oder Nutzverbindungen aufweist. Speichereinrichtungen im Mobilfunknetz enthalten die Teilnehmerdaten der registrierten mobilen Teilnehmer, die Anrufe absetzen und entgegennehmen wollen. Zur Ermittlung der jeweiligen Anrufgebühr für einen Anruf ist zumindest eine Vergebührungseinrichtung im Mobilfunknetz angeordnet, die anrufbezogene Datensätze - beispielsweise des A-Teilnehmers (anrufender Teilnehmer) und des B-Teilnehmers (angerufener Teilnehmer) - aufzeichnet und abhängig von diesen Datensätzen die Anrufgebühr berechnet. Im Zeichen der wachsenden Anzahl deregulierter Kommunikationsnetze, einer höheren Mobilitätsnachfrage und sinkenden Preisen für Telekommunikationsleistungen sowie hohen Kosten zur Bereitstellung der letzten Meile für einen Festnetzanschluss eines leitungsgebundenen Teilnehmers ist es wünschenswert, auch im Mobilfunknetz eine der Gebührenstruktur von Festnetzen nachgebildete Gebührenstruktur zur Vergebührung der Anrufe mobiler Teilnehmer zu haben. Dies würde eine höhere Bereitschaft der leitungsgebundenen Teilnehmer, die in der Regel geringere Gebühren gegenüber den mobilen Teilnehmern haben, zum Wechsel in die mobile Kommunikation nach sich ziehen.

Aus der internationalen Patentanmeldung WO 97/08884 sind ein Verfahren und ein Mobilfunknetz zur Vergebührung von Anrufen mobiler Teilnehmer bekannt. Dabei versorgen Basisstationen die Funkzellen des zellular aufgebauten Netzes. Um auch den mobilen Teilnehmern eine flexiblere Gebührenstruktur - vergleichbar der im Festnetz - anbieten zu können, legt der Netzbetreiber des Mobilfunknetzes fest, welche Funkzellen zu Gebührenzonen (charging regions), in denen jeweils durch einen entsprechend zugeordneten Zonentarif eine spezielle Vergebührung gilt, sowie welche Gebührenzonen zu Gebührengebieten (charging areas) gruppiert werden. Der Netzbetreiber veranlasst die Gruppierung der Funkzellen und/oder der Gebührenzonen für die mobilen Teilnehmer, die einen gemeinsamen Ort und ein gemeinsames Telefonierverhalten aufweisen.

Aus der Europäischen Patentanmeldung EP 0 597 638 A1 ist ein Mobilfunksystem bekannt, bei dem eine Vergebührung des Anrufs abhängig vom momentanen Aufenthaltsort der Mobilstation durchgeführt wird. So werden niedrige Gebühren beispielsweise dann abgebucht, wenn die Mobilstation sich in ihrem Heimbereich befindet. Eine Gruppierung von Funkzellen und/ oder Gebieten für eine bevorzugte Vergebührung erfolgt nicht.

Aus der internationalen Patentanmeldung WO 96/20571 ist ein Verfahren zur Verbesserung der Vergebührungskriterien in einem Mobilfunknetz bekannt, bei dem eine Dienstesteuereinrichtung (Service_Control Point) analysiert, ob die Funkzelle, in dem sich der anrufende mobile Teilnehmer gerade aufhält, und die Funkzelle, in dem sich der angerufene mobile Teilnehmer aktuell befindet, zu einer gemeinsamen speziellen Funkzellengruppe gehören. Für diese spezielle Funkzellengruppe wird von der Dienstesteuereinrichtung ein bestimmtes Vergebührungskriterium angewendet. Dabei sind die Funkzellen der Funkzellengruppe in Gebieten, die von unterschiedlichen Vermittlungseinrichtungen bedient werden, angeordnet.

Aus der internationalen Patentanmeldung WO 97/13387 ist ein Verfahren zur Identifikation einer Heimatzone in einem Mobilfunksystem bekannt, bei dem zum Zeitpunkt der Registrierung in der Heimatzone eine spezielle Anrufnummer von einem Kunden gewählt wird. Das Mobilfunksystem identifiziert den Kunden sowie die Anrufnummer und ermittelt, welche Basisstationen in Verbindung mit der Registrierung aktiv sind. Der Kunde hat dann Zugriff zu bestimmten Diensten innerhalb der Heimatzone oder zu einer verringerten Vergebührung.

Aus der nachveröffentlichten internationalen Patentanmeldung WO 98/42151 mit dem Veröffentlichungstag 24. September 1998 ist ein Verfahren zur Bestimmung der Anrufgebühr in einem Mobilfunknetz bekannt, bei dem mehrere Heimatzonen definiert und verschiedenen Funkgebieten zugeordnet werden. Bei Aufenthalt eines mobilen Teilnehmers in einer dieser Heimatzonen ermittelt die zuständige Vermittlungseinrichtung, ob diese Heimatzone bezüglich der Anwendung einer verringerten Vergebührung des Anrufs momentan wirksam ist. Die nach Größe und Ort unterschiedlichen Heimatzonen können im Hinblick auf die Vergebührung bezüglich des Zeitpunkts des Anrufs - beispielsweise zu welcher Tageszeit oder an welchem Wochentag - variieren.

Daher ist es Aufgabe der vorliegenden Erfindung, ein Verfahren der eingangs genannten Art zu schaffen, das einfach durchführbar ist und durch das die Vergebührung von Anrufen im Mobilfunknetz besser an die Bedürfnisse und wünsche der Teilnehmer in Bezug auf eine flexiblere Gebührenstruktur angepasst werden kann.

Diese Aufgabe wird durch die Merkmale des Patentanspruchs 1 gelöst. Weiterbildungen der Erfindung sind in den Unteransprüchen angegeben.

Gemäß dem Gegenstand der Erfindung werden für den mobilen Teilnehmer eine oder mehrere Zonen durch Zusammenfassung von Funkzellen und/oder von Aufenthaltsgebieten teilnehmerindividuell definiert und die Zonen jeweils einem geografischen Ort des mobilen Teilnehmers zugeordnet, sowie Zonentarife den Zonen zugeteilt. Die Vergebührungseinrichtung wird über die für den mobilen Teilnehmer definierten Zonen und die Zonentarife informiert, die bei Aufenthalt des mobilen Teilnehmers in einer der Zonen zum Ermitteln der jeweiligen Anrufgebühr verwendet werden. Die teilnehmerindividuelle Vereinbarung von Zonen mit zugehörigen - z.B. unterschiedlichen - Zonentarifen führt zu einer flexibleren Gebührenstruktur ähnlich einer gestaffelten Gebührenstruktur im Festnetz. Die Zuordnung der Zonen zu jeweils einem geografischen Ort des mobilen Teilnehmers und die Zuteilung eines Zonentarifs zur jeweiligen Zone ermöglicht die Definition mehrerer Zonen für ein- und demselben mobilen Teilnehmer. Ein weiterer Vorteil der Zuordnung besteht darin, dass bei Kenntnis des geografischen Orts des Teilnehmers die entsprechende Zone und der zugehörige Zonentarif automatisch zur Vergebührung in der Vergebührungseinrichtung vorliegt. Die zonenabhängige Vergebührung der Anrufe mobiler Teilnehmer gemäß dem Gegenstand der Erfindung basiert nicht auf einer vermittlungstechnischen Lösung durch die Vermittlungseinrichtungen des Mobilfunknetzes, sondern bezieht vorzugsweise entweder die Mobilstation des mobilen Teilnehmers bzw. deren Teilnehmeridentitätsmodul (SIM) oder ein IN-Konzept (Intelligent Netzwork) ein.

Gemäß der Erfindung werden die Informationen über die für den mobilen Teilnehmer definierten Zonen vom Netz zur Mobilstation gesendet und mobilstationsseitig - vorzugsweise in dem Teilnehmeridentitätsmodul der Mobilstation - gespeichert. Der Vorteil besteht darin, dass die Mobilstation bei Aufenthalt des mobilen Teilnehmers in einer zu einer definierten Zonen die jeweils gültige Zone am Endgerät jederzeit und sofort anzeigen kann. Die mobilstationsseitige Speicherung der Informationen benötigt keinen zusätzlichen Hardware-Aufwand und beeinflusst auch nicht die Leistungs-/Mobilitätskapazität des Endgeräts während der Berechung der jeweils gültigen Zone. Die im Endgerät unterstützten Leistungsmerkmale bleiben von den zusätzlichen Speichermaßnahmen unberührt.

Vorzugsweise werden als Informationen zumindest eine Zonenkennung zur Identifikation des Zonentyps sowie Zellenkennungen zur Identifikation der Funkzellen und/oder Gebietskennungen zur Identifikation der Aufenthaltsgebiete gespeichert.

Es hat sich dabei als vorteilhaft erwiesen, die Informationen zwischen dem Netz und der Mobilstation in Signalisierungsnachrichten zu übertragen, wobei es besonders vorteilhaft ist, die Informationen zwischen einer Kurznachrichtendiensteinrichtung des Netzes und der Mobilstation in einer oder mehreren Kurznachrichten des Kurznachrichtendienstes zu signalisieren. Dadurch brauchen zur Übertragung der Informationen keine neuen Signalisierungsverfahren oder - protokolle benutzt zu werden, was die Implementierung der zonenabhängigen Vergebührung in einem bestehenden Mobilfunknetz wesentlich erleichtert.

Gemäß der Erfindung ist vorgesehen dass zur Überprüfung, ob der mobile Teilnehmer sich in einer seiner definierten Zonen aufhält, ein Vergleich von über die Luft empfangene Informationen, die eine Lokalisierung der Mobilstation in einer Funkzelle oder in einem Aufenthaltsgebiet ermöglichen, mit den mobilstationsseitig gespeicherten Informationen durchgeführt wird. Dadurch kann die Lokalisierung des mobilen Teilnehmers hinsichtlich seines Aufenthalts in einer der definierten Zonen jederzeit überwacht werden, sobald die Mobilstation sich in das Mobilfunknetz eingebucht hat.

Weiterhin ist es von Vorteil, wenn bei mehreren ineinanderliegenden Zonen eine Priorisierung der Zonen mit entsprechenden Zonentarif zur Vergebührung erfolgt. Auch eine Aufsplittung des für eine definierte Zone gültigen Zonentarifs in einem Basistarif und in einem distanzabhängigen Tarif, der die Aufenthaltsorte des anrufenden Teilnehmers und/oder des angerufenen Teilnehmers berücksicht, führt zu einer erhöhten Flexibilität der Gebührenstruktur für den mobilen Teilnehmer.

Sind die Zonen intialisiert und eingerichtet, kann vorzugsweise netzseitig jederzeit eine Überprüfung der in der Mobilstation und in der Vergebührungseinrichtung vorliegenden Informationen teilnehmerspezifisch initiiert werden. Dabei werden die gespeicherten Informationen angefordert und ausgewertet. Damit können möglicherweise auftretende Unterschiede in den netzseitig und mobilstationsseitig gespeicherten Informationen über die für einen Teilnehmer jeweils gültigen Zonen und Zonentarife aufgedeckt und korrigiert werden.

Insbesondere hat sich als Vorteil erwiesen, dass Änderungen der Netzstruktur bezogen auf die Funkzellen und/oder die Aufenthaltsgebiete netzseitig berücksichtigt und neue Informationen zur Kennzeichnung der von den Änderungen betroffenen Zonen für die jeweiligen mobilen Teilnehmer in der Netzdatenbasis und in der Vergebührungseinrichtung eingetragen werden.

Gemäß der Erfindung werden die für den mobilen Teilnehmer einzurichtenden Zonen vom Teilnehmer selbst ferninitialisiert. Bei der Fernintialisierung hält sich der mobile Teilnehmer an seinem geografischen Ort auf und legt über seine Mobilstation, die sich an dem jeweiligen geographischen Ort der Zonen befindet, im Dialog mit dem Mobilfunknetz die Funkzellen und/oder Aufenthaltsgebiete seiner gewünschten Zonen durch Eingaben in die Mobilstation fest.

Bei einer besonders vorteilhaften Weiterbildung der Erfindung erfolgt eine Speicherung der teilnehmerindividuellen Definition der Zonen für den Teilnehmer und die Zuordnung der Zonen zu geografischen Orten sowie die Zuteilung der Zonentarife zu den Zonen in einer die Steuerung von Diensten intelligenter Netze unterstützenden Dienstesteuerungsstelle. Dies entspricht einer Implementierung der zonenabhängigen Vergebührung anhand eines IN-Konzepts. Die Vorteile dieser Lösung bestehen darin, die Zoneninformationen lediglich an einer zentralen Stelle - innerhalb der Dienstesteuerungsstelle - speichern und pflegen zu müssen, sowie sehr flexibel zukünftige Netzwerkplanunen - beispielsweise durch Ausdehnung oder Änderung der zellularen Netzstruktur - und ,Teilnehmerdatenhaltung sowie Betrugsüberwachung bezüglich der Gebühren und Tarifzonen steuern und verwalten zu können. Ein weiterer Vorteil des IN-Konzepts besteht in dem eingeführten einfachen Interworking zwischen Mobilfunknetz und Dienstesteuerungsstelle zur Unterstützung von IN-Diensten, beispielsweise hinsichtlich der Teilnehmerrufnummern-Portabilität. Die Anrufbehandlung bei Vorliegen eines IN-Anrufs kann gemäß bekannter Maßnahmen und Prozeduren - beispielsweise der Signalisierung nach dem zentralen Zeichengabesystem Nr 7 - zwischen Vermittlungseinrichtung und Dienstesteuerungsstelle ohne Mehraufwand genutzt werden.

Dabei ist von Vorteil, dass die Dienstesteuerungsstelle eine Dienstelogik enthält, die abhängig vom Erkennen des In-Anrufs teilnehmerspezifisch die Zonen in einer Initialisierungsphase registriert oder den Anruf in einer Anrufbehandlungsphase in Bezug auf einen möglichen Aufenthalt in einer der definierten Zonen oder in einer Änderungsphase die Zonen für den anrufenden Teilnehmer modifiziert bzw. löscht.

Vorzugsweise wird in der Dienstesteuerungsstelle eine Liste der Zuordnungen zwischen geografischen Orten und Zellenkennungen zur Identifikation der Funkzellen und/oder Gebietskennungen zur Identifikation der Aufenthaltsgebiete gespeichert. Eine andere vorteilhafte Weiterbildung der Erfindung sieht vor, dass abhängig vom Erkennen eines In-Anrufs teilnehmerspezifisch die Zonen für den anrufenden mobilen Teilnehmer in einer Initialisierungsphase registriert und Informationen über die jeweils gültigen Zonen bereitgestellt werden. Diese Informationen werden dann vorzugsweise in einer oder mehreren Kurznachrichten des Kurznachrichtendienstes zur Mobilstation des Teilnehmers gesendet und mobilstationsseitig gespeichert. Dadurch kann eine Anrufbehandlung ohne Zugriff zur Dienstesteuerungsstelle erfolgen. Die mobilstationsseitig gespeicherten Informationen können zur Anzeige der jeweils gültigen Zone an der Mobilstation des mobilen Teilnehmers herangezogen werden. Die Vergebührungseinrichtung besitzt alle zonenabhängigen Tarifinformationen um die anrufbezogenen Datensätze berechnen und auswerten-zu können. Eine Anzeige, in welcher Zone der mobile Teilnehmer sich gerade befindet, kann daher in Echtzeit erfolgen.

Einzelheiten der Erfindung werden in Ausführungsbeispielen, die in der Zeichnung dargestellt sind, näher erläutert. Im einzelnen zeigen
- FIG 1: ein Blockschaltbild der Einrichtungen zur zonenabhängigen Vergebührung von Anrufen mobiler Teilnehmer bei Verwendung des Kurznachrichtendienstes für die Informationsübertragung zwischen Netz und Mobilstation,
- FIG 2: die beispielhafte Ausgestaltung einer Heimatzone, bestehend aus mehreren Funkzellen,
- FIG 3: die beispielhafte Ausgestaltung einer Stadtzone, bestehend aus mehreren Aufenthaltsgebieten sowie einer zusätzlichen Funkzelle,
- FIG 4: die beispielhafte Ausgestaltung von zwei Bürozonen, bestehend aus jeweils mehreren Funkzellen,
- FIG 5: einen Nachrichtenfluss zum Ferninitialisieren der jeweiligen Zonen durch den mobilen Teilnehmer selbst.

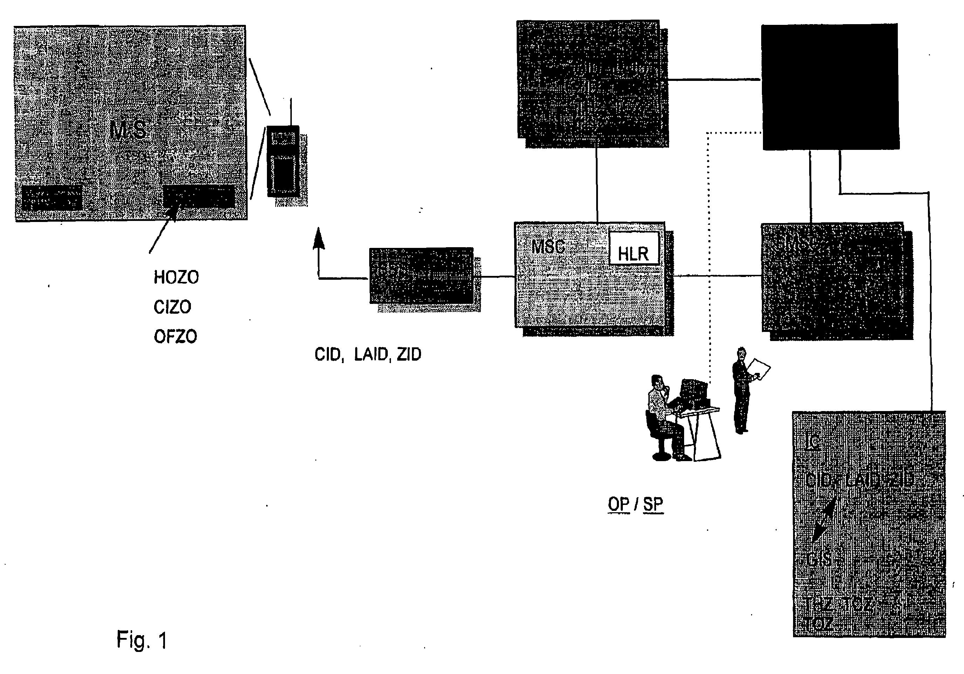

FIG 1 zeigt das Blockschaltbild der Einrichtungen für eine zonenabhängige Vergebührung von Anrufen in einem Mobilfunknetz, die von Mobilstationen mobiler Teilnehmer gesendet und empfangen werden können. Im vorliegenden Beispiel ist eine Mobilstation MS eines mobilen Teilnehmers dargestellt, die über eine Funkschnittstelle mit den Einrichtungen des Mobilfunknetzes drahtlos verbunden ist. Dabei weist das Mobilfunknetz - z.B. ein Mobilfunknetz nach dem GSM-Standard - an der Funkschnittstelle ein funktechnisches Teilsystem BSS auf, das über Basis-Sende-Empfangsstationen in den einzelnen Funkzellen des zellular strukturierten Mobilfunknetzes sowie über Basisstationssteuerungen, die mit den Empfangsstationen verbunden sind, verfügt. Die Empfangsstationen dienen zum Senden/Empfangen von Signalisierungsinformationen bzw. Nutzinformationen, die zwischen den Mobilstationen und dem Netz drahtlos über Funksignale ausgetauscht werden. Die Basisstationssteuerungen übernehmen die steuerungstechnischen Funktionen für die Funkübertragung, so beispielsweise die Zuordnung von Übertragungskanälen, in denen die Signalisierungsinformationen und/oder die Nutzinformationen übertragen werden.

Mit dem funktechnischen Teilsystem BSS ist ein vermittlungstechnisches Teilsystem verbunden, das üblicherweise mehrere vermittlungstechnische Einrichtungen - beispielsweise die Mobilvermittlungsstellen MSC - zum Durchschalten der Signalisierungsverbindungen und/oder der Nutzverbindungen zu/von den Mobilstationen aufweist. Im vermittlungstechnischen Teilsystem sind weiterhin Speichereinrichtungen - wie beispielsweise ein Heimatregister HLR und ein oder mehrere Besucherregister - zum Speichern der Teilnehmerdaten der im Mobilfunknetz registrierten mobilen Teilnehmer angeordnet. Die Teilnehmerdaten eines mobilen Teilnehmers sind dabei in einem für ihn zuständigen Heimatregister HLR für die Dauer seiner Registrierung im Netz permanent eingetragen, während die Teilnehmerdaten des mobilen Teilnehmers in einem Besucherregister für die Dauer seines Aufenthalts im Zuständigeitsbereich einer zugehörigen Mobilvermittlungsstelle MSC nur vorübergehend eingetragen sind. An die Mobilvermittlungsstelle MSC ist zumindest eine Kurznachrichtendiensteinrichtung SMSC angeschlossen, die für den mobilen Teilnehmer bzw. seine Mobilstation bestimmte Kurznachrichten zwischenspeichert und bei Erreichbarkeit der Mobilstation eine oder mehrere Kurznachrichten parallel zu gegebenenfalls bestehenden Anrufverbindungen zur jeweiligen Mobilstation MS signalisiert.

Mit der Mobilvermittlungsstelle MSC ist darüber hinaus eine Vergebührungseinrichtung BC verbunden, die die anrufbezogenen Datensätze des A-Teilnehmers und des B-Teilnehmers aufzeichnet und die jeweilige Anrufgebühr durch Verknüpfung der A-seitigen und B-seitigen Datensätze (Call Data Records) ermittelt. Mit der Vergebührungseinrichtung BC steht eine Verwaltungseinrichtung CCC in Verbindung, die einerseits die Vergebührungseinrichtung BC verwaltet und andererseits Eingaben von einem Netzbetreiber OP oder einem Diensteanbieter SP über eine gesonderte Schnittstelle empfängt. Die Verwaltungseinrichtung CCC ist auch mit der Kurznachrichtendiensteinrichtung SMSC verbunden.

Im Mobilfunknetz ist darüber hinaus eine Netzdatenbasis IC angeordnet und an die Verwaltungseinrichtung CCC angeschlossen, über die die Netzdatenbasis IC mit den übrigen Netzeinrichtungen des Mobilfunknetzes kommunizieren kann. Die Netzdatenbasis IC speichert Zellenkennungen CID zur Identifikation von Funkzellen des zellular strukturierten Mobilfunknetzes und Gebietskennungen LAID zur Identifikation von Aufenthaltsgebieten im Mobilfunknetz. Durch Zusammenfassung der Funkzellen und/oder der Aufenthaltsgebiete, die an ihren Kennungen identifizierbar sind, werden für den mobilen Teilnehmer eine oder mehrere Zonen teilnehmerindividuell definiert. Für den Fall, dass es sich um unterschiedliche Zonen handelt, können die einzelnen Zonen anhand ebenfalls in der Netzdatenbasis IC abgelegter Zonenkennungen ZID identifiziert werden. Darüber hinaus sind den Zonen, z.B. HOZO (Home Zone), CIZO (City Zone) und OFZO (Office Zone), entsprechende Zonentarife, z.B. THZ, TCZ und TOZ, zugeordnet, die auch in der Netzdatenbasis IC, besonders aber in der Vergebührungseinrichtung BC gespeichert sind.
Die Netzdatenbasis IC verfügt auch über ein grafisches Informationssystem GIS, durch das eine Beziehung zwischen dem Ort - z.B. der Adresse - eines mobilen Teilnehmers und seiner Heimatzone HOZO, in der seine Heimat-Funkzelle liegt, herstellbar ist. Die zellulare Netzstruktur des Mobilfunknetzes gemäß der bestehenden Funknetzplanung sowie eine Aufzeichnung der Gebäude, der Straßennamen und der Gebäudenummern werden als geografische Daten dem Informationssystem GIS zur Verfügung gestellt, das daraus eine Zuordnung der Zone zu einem geografischen Ort - z.B. der Heimatzone HOZO zu seiner Privatadresse - des mobilen Teilnehmers durch einfache softwaretechnische Funktionen liefert. Für den mobilen Teilnehmer läßt sich die Heimatzone HOZO dadurch definieren, dass durch Eingabe seiner Adresse - beispielsweise über den Netzbetreiber OP bzw. Diensteanbieter SP - in die Verwaltungseinrichtung CCC bzw. Netzdatenbasis IC die zu der Heimatzone gehörigen Funkzellen mit ihren Zellenkennungen CID ausgegeben werden. Erfindungsgemäß ist vorgesehen, dass die für den mobilen Teilnehmer einzurichtenden Zonen vom Teilnehmer jeweils selbst ferninitialisiert werden, indem er gemäß Anspruch 1 über seine Mobilstation im Dialog mit dem Mobilfunknetz die Funkzellen und/oder Aufenthaltsgebiete seiner gewünschten Zonen durch Eingaben in die Mobilstation festlegt. Bei Definition mehrerer Zonen für ein- und denselben mobilen Teilnehmer werden die Zonentarife THZ, TCZ, TOZ - vorzugsweise unterschiedliche Zonentarife - den eingerichteten Zonen HOZO, CIZO, OFZO zugeteilt, um zur Vergebührung der Anrufe eine zonenabhängige Gebührenstruktur den mobilen Teilnehmern ähnlich der Gebührenstruktur in dem Festnetz anbieten zu können.

Für den Fall, dass die Netzstruktur sich ändert oder die Zellenkennung (Cell Global Identity, CGI) neu definiert wird, erfolgt eine Korrektur für die mobilen Teilnehmer, für die Zonen mit jeweils von den Änderungen betroffenen Funkzellen bzw. Aufenthaltsgebieten eingerichtet sind. In der Netzdatenbasis IC werden immer die Funkzellenkennungen CID, die Gebietskennungen LAID und die Zonenkennungen ZID gespeichert, die für den jeweiligen mobilen Teilnehmer aktuell gültig sind. Diese Informationen werden auch der Vergebührungseinrichtung BC - im dargestellten Beispiel über die Verwaltungseinrichtung CCC - mitgeteilt, so dass die Vergebührungseinrichtung BC über die für einen mobilen Teilnehmer gültigen Zonen und Zonentarife für eine zonenabhängige Vergebührung jederzeit informiert ist. So werden bei Aufenthalt des mobilen Teilnehmers in einer der für ihn definierten Zonen die entsprechenden Zonentarife bei der Verknüpfung der A-seitigen und B-seitigen aufgezeichneten Datensätze berücksichtigt. Vorzugsweise umfasst der Zonentarif einen Basistarif sowie einen von der Distanz zwischen A-Teilnehmer und B-Teilnehmer abhängigen Tarif. Für die Festlegung der distanzabhängigen Vergebührung werden die Aufenthaltsorte des A-Teilnehmers und/oder des B-Teilnehmers - je nachdem, ob es sich um einen mobilen oder einen leitungsgebundenen Teilnehmer handelt oder eine definierte Zone vorliegt oder nicht, bei der Berechnung der Anrufgebühr ermittelt.

Die Informationen CID, LAID, ZID über die für den mobilen Teilnehmer definierten Zonen werden im Mobilfunknetz aufbereitet - beispielsweise von der Netzdatenbasis IC - und zur Mobilstation MS des Teilnehmers gesendet - vorzugsweise in einer oder mehreren Kurznachrichten des bekannten Kurznachrichtendienstes (Short Message Service) - sowie mobilstationsseitig gespeichert. Es hat sich dabei als günstig erwiesen, die Zoneninformationen im Teilnehmeridentitätsmodul SIM der Mobilstation MS einzutragen. Zur Informationsübertragung zwischen Netz und Mobilstation können auch andere Signalisierungsnachrichten benutzt werden, wie beispielsweise die USSD-Containernachrichten (Unstructured Supplementary Services Data), um zur Realisierung der zonenabhängigen Vergebührung bestehende Signalisierungsverbindungen nicht erweitern zu müssen oder gar neue Signalisierungsprotokolle einführen zu müssen. Bei Verwendung des Kurznachrichtendienstes wird die Kurznachrichtendiensteinrichtung SMSC von der Verwaltungseinrichtung CCC mit den Zoneninformationen beliefert und aufgefordert, diese Informationen gemäß dem Kurznachrichtendienst zu übermitteln.

Sobald das Teilnehmeridentitätsmodul SIM in der Mobilstation MS aktiviert ist, das heisst, die Mobilstation MS sich in das Mobilfunknetz einbucht, wird mobilstationsseitig überprüft, ob sie sich in einer für den mobilen Teilnehmer definierten Zone befindet. Die Überprüfung erfolgt erfindungsgemäß durch Vergleich von Informationen, die über die Luft im Funkfeld empfangen werden kann und die eine Lokalisierung der Mobilstation MS in einer der identifizierbaren Funkzellen oder in einem der identifizierbaren Aufenthaltsgebiete ermöglichen, mit den mobilstationsseitig gespeicherten Informationen. Die für den mobilen Teilnehmer aktuell gültige Zone wird an der Mobilstation MS optisch angezeigt - beispielsweise durch ein Wort im Display oder ein sichtbares Kennungszeichen (Icon) und/oder akustisch mitgeteilt - beispielsweise durch einen Ton oder eine Melodie. Abhängig von dem Status der Mobilstation MS, das heisst, ob sich die Mobilstation in einer definierten Zone aufhält oder nicht aufhält, werden unterschiedliche Tarife zur Vergebührung herangezogen und optional entsprechende Sicherheitsfunktionen und/oder anrufbezogene Aktionen mobilstationsseitig und netzseitig unterstützt oder nicht unterstützt. Anrufbezogene Aktionen sind beispielsweise das Sperren von abgehenden Anrufen oder das Sperren internationaler Anrufe jeweils für den Fall, dass sich die Mobilstation MS nicht in zumindest einer der definierten Zonen aufhält. Relevante Sicherheitsfunktionen betreffen beispielsweise die Verminderung des Gebührenbetrugs durch Anwendung und Auswertung der zonenabhängigen Vergebührung.

Angenommen, es sind mobilstationsseitig Zoneninformationen zu mehreren Zonen - beispielsweise einer Heimatzone HOZO, einer Stadtzone CIZO und einer oder mehrerer Bürozonen OFCO - gespeichert, die zumindest teilweise ineinanderliegen, kann eine Priorisierung der Zonen zur Vergebührung mit den entsprechenden Zonentarifen erfolgen. Befindet sich beispielsweise die Heimatzone HOCO in der Stadtzone CIZO, wird beispielsweise der billigere Zonentarif der Heimatzone HOCO dem teureren Zonentarif der Stadtzone CIZO vorgezogen und zur Vergebührung durch die Vergebührungseinrichtung BC berücksichtigt. Bei einer Modifikation der Netzstruktur, die Auswirkung auf Funkzellen und/oder Aufenthaltsgebiete hat, wird eine Überprüfung der mobilstationsseitig und netzseitig vorliegenden Zoneninformationen teilnehmerspezifisch für den jeweiligen mobilen Teilnehmer im Mobilfunknetz initiiert. Dabei startet eine Netzeinrichtung - beispielsweise die Kurznachtendiensteinrichtung SMSC - eine Anforderung über den Kurznachrichtendienst an die Mobilstatiion MS, um die relevanten Daten, die im Teilnehmeridentitätsmodul gespeichert sind, zum Netz zu übermitteln. Die Mobilstation MS startet ihrerseits den-Kurznachrichtendienst in Richtung des Mobilfunknetzes und überträgt in einer oder mehreren Kurznachrichten die angeforderten Daten, die anschliessend netzseitig ausgewertet werden. Vorzugsweise werden auch die Zoneninformationen von der Vergebührungseinrichtung BC angefordert und auf Identität mit den von der Mobilstation MS empfangenen Daten verglichen. Vorzugsweise übernimmt die Verwaltungseinrichtung CCC diese Funktion. Die Funkzellen und/oder die Aufenthaltsgebiete der definierten Zonen betreffende Änderungen werden netzseitig aufbereitet und entsprechende neue Zoneninformationen der von den Änderungen betroffenen Zonen für die jeweiligen Teilnehmer in der Netzdatenbasis IC und in der Vergebührungseinrichtung BC eingetragen. Eine Aktualisierung der mobilstationssetig gespeicherten Zoneninformationen erfolgt ebenfalls, indem die neuen Informationen der Mobilstation MS signalisiert und mobilstationsseitig gespeichert werden.

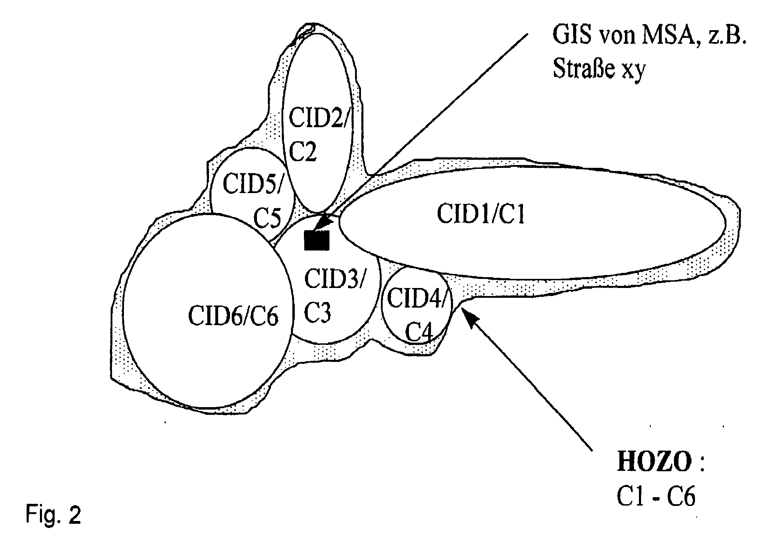

Die FIG 2, 3 and 4 zeigen Beispiele für unterschiedliche Zonen, die für einen mobilen Teilnehmer MSA durch Zusammenfassung von Funkzellen und/oder von Aufenthaltsgebieten definiert sind. FIG 2 zeigt die Ausbildung einer Heimatzone HOCO, bestehend aus mehreren Funkzellen C1, C2...C6 mit den Zellenkennungen CID1, CID2...CID6. Der vom geografischen Informationssystem GIS zu verarbeitende geografische Ort des mobilen Teilnehmers MSA ist beispielsweise die Straße xy seiner Privatadresse, die in der Funkzelle C3 mit der Zellenkennung CID3 liegt. Durch Zuordnung des geografischen Orts des Teilnehmers MSA zu der Heimatzone HOCO kann ein zugehöriger Zonentarif, der beispielsweise für alle Heimatzonen oder zumindest für einen Teil der Heimatzonen festgelegt ist, zur Vergebührung des Anrufs von der Vergebührungseinrichtung verwendet werden. Durch Vergleich der im Funkfeld einer der Funkzellen empfangenen Informationen, bestehend beispielsweise aus der Zellenkennung der Funkzelle, mit den mobilstationsseitig gespeicherten Zoneninformationen kann festgestellt werden, dass sich der mobile Teilnehmer MSA in der Heimatzone HOCO momentan aufhält. Die für ihn gültige Heimazone HOZO und gegebenenfalls die anfallenden Gebühren können dann an der Mobilstation akustisch oder optisch in Echtzeit angezeigt werden. Grundsätzlich können Heimatzonen im gesamten Funkversorgungsbereich eines Mobilfunknetzes lokalisiert werden, eine Zulassung lediglich bestimmter Netzbereiche für die zonenabhängige Vergebührung der Anrufe kann jedoch dem Netzbetreiber vorbehalten sein.

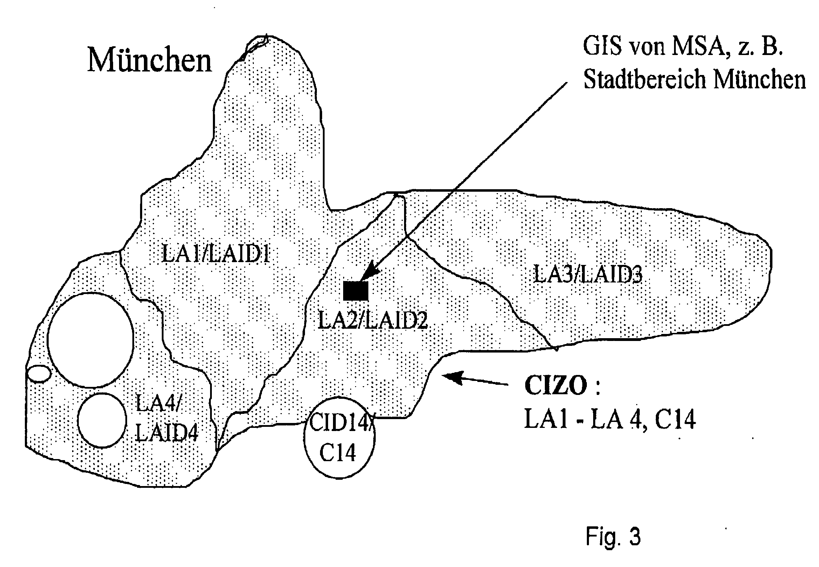

FIG 3 zeigt beispielhaft die Ausbildung eine= Stadtzone CIZO, die den Stadtbereich München betrifft. Dabei sind mehrere Aufenthaltsgebiete (Location Areas) LA1, LA2, LA3 und LA4 mit Gebietskennungen LAID1, LAID2, LAID3 und LAID4 sowie eine einzelne Funkzelle C14 mit der Zellenkennung CID14 zu der Stadtzone für den Stadtbereich München zusammengefasst und als Stadtzone CIZO dem Teilnehmer MSA individuell zugeteilt. Es sei angenommen, dass für die Stadtzone CIZO ein anderer Zonentarif als für die Heimatzone gemäß der Darstellung in FIG 2 gilt. Liegen mehrere Zonen ineinander, beispielsweise die Heimatzone in der Stadtzone, so wird die Zone mit dem für den mobilen Teilnehmer günstigeren Zonentarif - beispielsweise prioritätengesteuert - ausgewählt und zur zonenabhängigen Vergebührung der Anrufe ausgewertet. Der geografische Ort des Teilnehmers, dem die Stadtzone CIZO zugeordnet ist, - im vorliegenden Beispiel der Stadtbereich München - kann durch eine geeignete Abbildung der geografischen Daten - Münchens - auf die zellulare Netzstruktur des Mobilfunknetzes festgelegt werden. Üblicherweise weist jedes Aufenthaltsgebiet, erkennbar an der jeweiligen Gebietskennung LAIDI bis LAID9, mehrere Funkzellen auf.

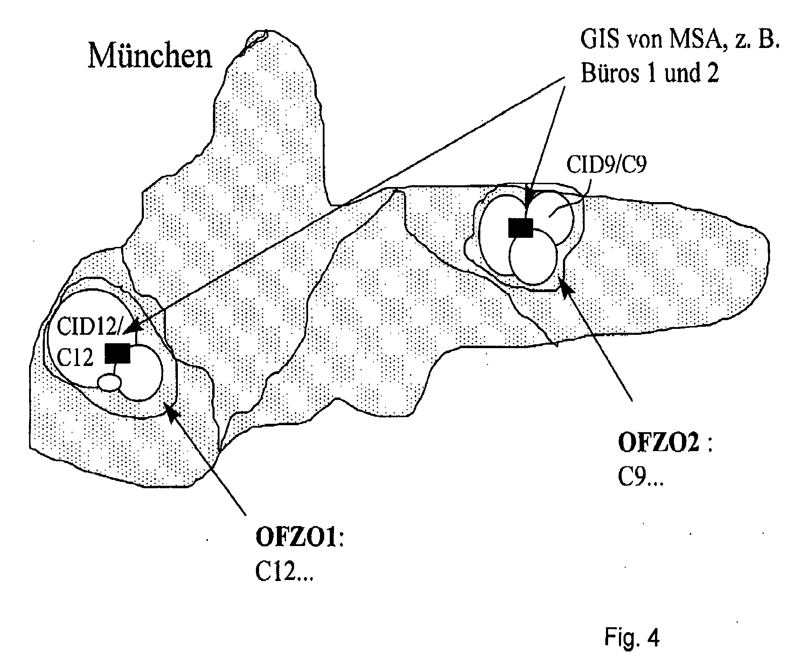

FIG 4 zeigt eine beispielhafte Ausbildung von zwei Bürozonen OFZO1 und OFZO2, die für den mobilen Teilnehmer MSA durch Zusammenfassung von Funkzellen eingerichtet wurden. Dabei befinden sich beide Bürozonen beispielsweise in München und bestehen jeweils aus drei Funkzellen, von denen jeweils eine mit einer Zellenkennung beispielhaft bezeichnet ist. So umfasst die Bürozone OFZO1 die Funkzelle C12 mit der Zellenkennung CID12 und die Bürozone OFZO2 die Funkzelle C9 mit der Zellenkennung CID9. Die Größe der Funkzellen kann dabei sehr unterschiedlich sein, was an der Darstellung gemäß FIG 6 für die beiden Bürozonen OFZO1 und OFZ02 deutlich wird. Für jede der beiden Bürozonen ist ein geografischer Ort, der die Lage der Büros - z.B. mit Strassenname und/oder Hausgebäude - festlegt, angebbar, dem jede Bürozone eindeutig zuordenbar ist.

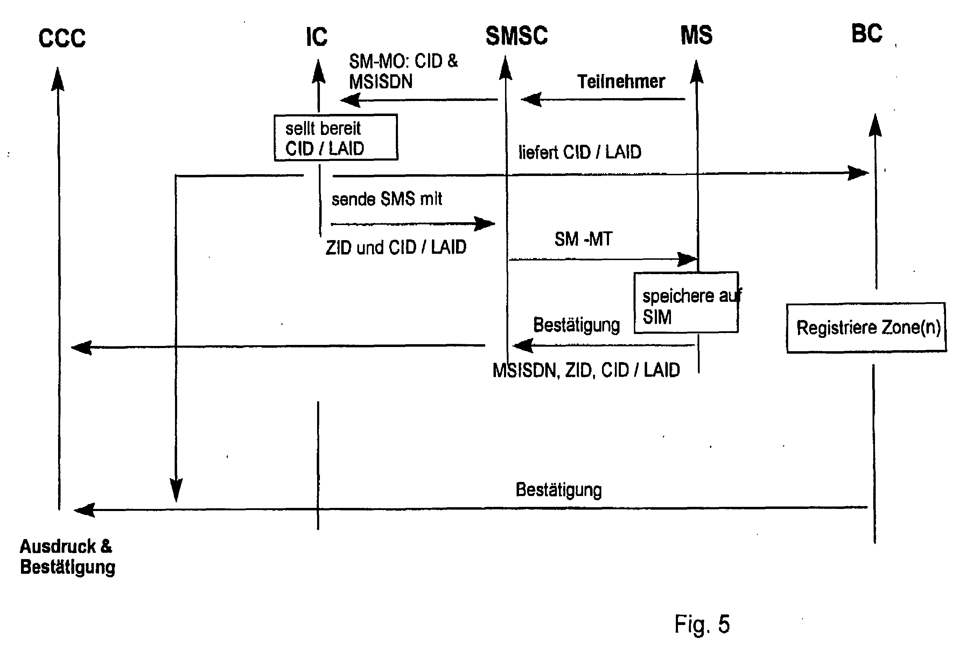

FIG 5 zeigt den Nachrichtenfluß zwischen den dargestellten Einrichtungen zum Ferninitialisieren der jeweiligen Zonen durch den mobilen Teilnehmer selbst- Dabei definiert der Teilnehmer beispielsweise seine gewünschten Zonen als Heimatzone, Bürozone oder Stadtzone gemäß den Beispielen in den FIG 2 bis 4, indem er über seine Mobilstation MS, die sich an dem jeweiligen geographischen Ort der Zonen befindet, einen Dialog mit dem Mobilfunknetz - beispielsweise menügesteuert an der Mobilstation MS - führt. Drückt der mobile Teilnehmer beispielsweise eine bestimmte Taste an der Mobilstation MS oder gibt er einen bestimmten Befehl zum Senden einer Kurznachricht ein, wird der Kurznachrichtendienst zur Kurznachrichtendiensteinrichtung SMSC gestartet. Diese erzeugt eine oder mehrere Kurznachrichten SM-MO (short message mobile originated), in der die Zellenkennung CID der aktuellen Funkzelle, in der die Mobilstation MS sich befindet, und die Teilnehmerrufnummer MSISD des mobilen Teilnehmers enthalten sind. Die Kurznachricht richtet sich an die Netzdatenbasis IC mit dem Aufruf, die Kennungen CID bzw. LAID bereit zu stellen. Ist dies geschehen, sendet die Netzdatenbasis IC eine Nachricht zur Kurznachrichtendiensteinrichtung SMSC zurück, in der diese aufgefordert wird, den Kurznachrichtendienst SMS (short message service) zu starten. Die Nachricht zwischen der Netzdatenbasis IC und der Kurznachrichtendiensteinrichtung SMSC enthält zumindest eine Zonenkennung ZID zur Kennzeichnung der gewünschten Zone und die Zellenkennungen CID bzw. Gebietskennungen LAID zur Identifikation der in der ausgewählten Zone liegenden Funkzellen bzw. Aufenthaltsgebiete.

Die Kurznachrichtendiensteinrichtung SMSC sendet eine oder mehrer Kurznachrichten SM-MT mit den jeweiligen Informationen zur Mobilstation MS. Die Mobilstation MS speichert die eintreffenden Informationen auf ihrem Teilnehmeridentitätsmodul SIM und bestätigt das Speichern der Informationen durch Rücksenden einer Bestätigungsnachricht mit Identifikationsdaten - beispielsweise der Teilnehmerrufnummer MSISDN sowie der Kennungen ZID und CID bzw. LAID. Die Kurznachrichtendiensteinrichtung SMSC leitet die Bestätigungsnachricht an die Verwaltungseinrichtung CCC weiter. Ebenso übermittelt die Vergebührungseinrichtung BC nach Erhalt und Speicherung der jeweiligen Kennungen CID bzw. LAID eine Bestätigungsnachricht zur Verwaltungseinrichtung CCC. Ein Ausdruck und eine Bestätigung der für den mobilen Teilnehmer definierten Zonen, deren Informationen vorzugsweise sowohl mobilstationsseitig als auch netzseitig in der Vergebührungseinrichtung BC gespeichert sind, erfolgt an den Netzbetreiber bzw. Diensteanbieter. Eine Bestätigung der erfolgreichen Initialisierung bzw. Registrierung seiner gewünschten Zonen kann der Teilnehmer auch über die Mobilstation MS erhalten, sofern durch den Dialog mit dem Netz eine entsprechende Bestätigungsnachricht - vorzugsweise wiederum über Signalisierungsnachrichten wie beispielsweise die Kurznachrichten des Kurznachrichtendienstes - von der Mobilstation MS empfangen und dem Teilnehmer optisch und/oder akustisch angezeigt wird.

## Patentansprüche

1. Verfahren zur Vergebührung von Anrufen, die von Mobilstationen (MS) mobiler Teilnehmer gesendet und empfangen werden können, in einem Mobilfunknetz mit
- einer aus Funkzellen aufgebauten zellularen Netzstruktur sowie mit
- funktechnischen Einrichtungen (BSS) zum Senden und Empfangen von Signalisierungs- und Nutzinformationen zu und von den Mobilstationen (MS),
- vermittlungstechnischen Einrichtungen (MSC) zum Durchschalten von Signalisierungs- und Nutzverbindungen,
- Speichereinrichtungen (HLR) zum Speichern von Teilnehmerdaten der mobilen Teilnehmer und
- einer Vergebührungseinrichtung (BC) zum Aufzeichnen von anrufbezogenen Datensätzen und zum Ermitteln der jeweiligen Anrufgebühr abhängig von den Datensätzen,
wobei bei dem Verfahren Funkzellen (C1...C6) und/oder Aufenthaltsgebiete (LA1 ...LA4) zu einer oder mehreren Zonen (HOZO, CIZO, OFZO) zusammengefasst und Zonentarife (THZ, TCZ, TOZ) den Zonen (HOZO, CIZO, OFZO) zugeordnet werden,
**dadurch gekennzeichnet,**
- **daß** die Zonen (HOZO, CIZO, OFZO) für den mobilen Teilnehmer jeweils teilnehmerindividuell definiert werden,
- daß die für den mobilien Teilnehmer einzurichtenden Zonen (HOZO, CIZO,OFZO) vom Teilnehmer jeweils selbst ferninitialisiert werden, indem er über seine Mobilstation, die sich an dem jeweiligen geographischen Ort der Zonen befindet, in Dialog mit dem Mobilfunknetz die Funkzellen und/oder Aufenthaltsgebiete seiner gewünschten Zonen durch Eingaben in die Mobilstation (MS) festlegt,
- **daß** von der Vergebührungseinrichtung (BC) jeweils durch eine Netzdatenbasis (IC) zur Verfügung gestellte Informationen über die für den mobilen Teilnehmer individuell definierten Zonen (HOZO, CIZO, OFZO) und Zonentarife (THZ, TCZ, TOZ) empfangen und bei Aufenthalt des mobilen Teilnehmers in einer der Zonen (HOZO, CIZO, OFZO) zum Ermitteln der jeweiligen Anrufgebühr verwendet werden,
- **daß** Informationen über die für den mobilen Teilnehmer definierten Zonen (HOZO, CIZO, OFZO) vom Mobilfunknetz zu der Mobilstation (MS) des Teilnehmers gesendet und in der Mobilstation oder in einem Teilnehmeridentitätsmodul (SIM) der Mobilstation gespeichert werden, und
- **daß** von der Mobilstation (MS) durch Vergleich von über die Luft empfangenen Informationen, die eine Lokalisierung der Mobilstation (MS) in einer identifizierbaren Funkzelle (z.B. C3) oder in einem identifizierbaren Aufenthaltsgebiet (z.B. LA2) ermöglichen, mit den mobilstationsseitig gespeicherten Informationen überprüft wird, ob sie sich in einer der für den mobilen Teilnehmer definierten Zonen (HOZO, CIZO, OFZO) aufhält, wobei die Überprüfung stattfindet, sobald die Mobilstation (MS) sich in das Mobilfunknetz einbucht.

2. Verfahren nach Anspruch 1,
**dadurch gekennzeichnet,**
**daß** die vom Mobilfunknetz zu der Mobilstation des Teilnehmers gesendeten Informationen zumindest eine Zonenkennung (ZID) zur Identifikation eines Zonentyps enthalten.

3. Verfahren nach Anspruch 1 oder 2,
**dadurch gekennzeichnet,**
**daß** die vom Mobilfunknetz zu der Mobilstation des Teilnehmers gesendeten Informationen Zellenkennungen (CID) zur Identifikation der Funkzellen und/oder Gebietskennungen (LAID) zur Identifikation der Aufenthaltsgebiete enthalten.

4. Verfahren nach einem der vorhergehenden Ansprüche,
**dadurch gekennzeichnet,**
**daß** von der Mobilstation (MS) das Speichern der vom Mobilfunknetz zu der Mobilstation des Teilnehmers gesendeten Informationen dem Mobilfunknetz bestätigt und dabei die für den Teilnehmer gespeicherten Informationen rückgesendet werden.

5. Verfahren nach einem der vorhergehenden Ansprüche,
**dadurch gekennzeichnet,**
**daß** die Informationen zwischen dem Mobilfunknetz und der Mobilstation (MS) in Signalisierungsnachrichten übertragen werden.

6. Verfahren nach Anspruch 5,
**dadurch gekennzeichnet,**
**daß** die Informationen zwischen einer Kurznachrichtendiensteinrichtung (SMSC) des Mobilfunknetzes und der Mobilstation (MS) in einer oder mehreren Kurznachrichten (SM-MT) eines Kurznachrichtendienstes signalisiert werden.

7. Verfahren nach einem der vorhergehenden Ansprüche,
**dadurch gekennzeichnet,**
**daß** der Aufenthalt der Mobilstation (MS) in einer der Zonen (HOZO, CIZO, OFZO) an der Mobilstation optisch angezeigt oder akustisch mitgeteilt wird.

8. Verfahren nach einem der vorhergehenden Ansprüche,
**dadurch gekennzeichnet,**
**daß** abhängig davon, ob sich die Mobilstation (MS) in einer der definierten Zonen (HOZO, CIZO, OFZO) aufhält bzw. nicht aufhält, entsprechende Sicherheitsfunktionen und/oder anrufbezogene Aktionen von der Mobilstation und dem Mobilfunknetz bei Aufenthalt in der Zone unterstützt bzw. bei Abwesenheit in der Zone nicht unterstützt werden.

9. Verfahren nach einem der vorhergehenden Ansprüche,
**dadurch gekennzeichnet,**
**daß** bei mehreren ineinanderliegenden Zonen (z.B. HOZO, CIZO) eine Priorisierung der Zonen mit den entsprechenden Zonentarifen zur Vergebührung erfolgt.

10. Verfahren nach einem der vorhergehenden Ansprüche,
**dadurch gekennzeichnet,**
**daß** der einer definierten Zone Zugeordnete Zonentarif (z.B. THZ) einen Basistarif und einen distanzabhängigen Tarif, der die Aufenthaltsorte des anrufenden Teilnehmers und/oder des angerufenen Teilnehmers berücksichtigt, umfaßt.

11. Verfahren nach einem der vorhergehenden Ansprüche,
**dadurch gekennzeichnet,**
**daß** netzseitig die in der Mobilstation (MS) und in der Vergebührungseinrichtung (BC) vorliegenden Informationen über die definierten Zonen (HOZO, CIZO, OFZO) teilnehmerspezifisch für den jeweiligen mobilen Teilnehmer angefordert und ausgewertet werden.

12. Verfahren nach einem der vorhergehenden Ansprüche,
**dadurch gekennzeichnet,**
**daß** Änderungen der Netzstruktur bezogen auf die Funkzellen (z.B. C1...C6) und/oder die Aufenthaltsgebiete (z.B. LA1...LA4) netzseitig berücksichtigt und neue Informationen zur Kennzeichnung der von den Änderungen betroffenen Zonen (z.B. HOZO, CIZO) für die jeweiligen mobilen Teilnehmer in der Netzdatenbasis (IC) und in der Vergebührungseinrichtung (BC) eingetragen werden.

13. Verfahren nach Anspruch 12,
**dadurch gekennzeichnet,**
**daß** die neuen Informationen zu der Mobilstation (MS) gesendet und mobilstationsseitig gespeichert werden.

14. Verfahren nach, Anspruch 11, 12 oder 13,
**dadurch gekennzeichnet,**
**daß** die Informationen zwischen einer Kurznachrichtendiensteinrichtung (SMSC) des Mobilfunknetzes und der Mobilstation (MS) in einer oder mehreren Kurznachrichten (SM-MT) eines Kurznachrichtendienstes signalisiert werden.

## Claims

1. Method for billing for calls, which can be sent and received by mobile stations (MS) belonging to mobile subscribers, in a mobile radio network having
- a cellular network structure made up of radio cells and also having
- radio centres (BSS) for sending and receiving signalling and useful information to and from the mobile stations (MS),
- switching centres (MSC) for putting through signalling and useful connections,
- memory devices (HLR) for storing subscriber data for the mobile subscribers, and
- a billing centre (BC) for recording call-related data records and for ascertaining the respective call charge on the basis of the data records,
where the method involves radio cells (C1...C6) and/or location areas (LA1 ...LA4) being combined to form one or more zones (HOZO, CIZO, OFZO) and zone tariffs (THZ, TCZ, TOZ) being associated with the zones (HOZO, CIZO, OFZO),
**characterized**
- **in that** the zones (HOZO, CIZO, OFZO) are defined for the mobile subscriber on a subscriber-specific basis in each case,
- **in that** the zones (HOZO, CIZO, OFZO) to be set up for the mobile subscriber are initialized remotely by the subscriber himself in each case by using his mobile station, which is at the respective geographical location of the zones, to hold a dialogue with the mobile radio network stipulating the radio cells and/or location areas for his desired zones by means of inputs into the mobile station (MS),
- **in that** the billing centre (BC) receives respective information, provided by a network database (IC), about the zones (HOZO, CIZO, OFZO) and zone tariffs (THZ, TCZ, TOZ) individually defined for the mobile subscriber and, when the mobile subscriber is located in one of the zones (HOZO, CIZO, OFZO), uses it to ascertain a respective call charge,
- **in that** information about the zones (HOZO, CIZO, OFZO) defined for the mobile subscriber is sent from the mobile radio network to the subscriber's mobile station (MS) and is stored in the mobile station or in a subscriber identity module (SIM) in the mobile station, and
- **in that** the mobile station (MS) compares information received by air which allows localization of the mobile station (MS) in an identifiable radio cell (e.g. C3) or in an identifiable location area (e.g. LA2) with information stored on the mobile station in order to check whether it is in one of the zones (HOZO, CIZO, OFZO) defined for the mobile subscriber, the check being carried out as soon as the mobile station (MS) registers in the mobile radio network.

2. Method according to Claim 1,
**characterized**
**in that** the information sent from the mobile radio network to the subscriber's mobile station contains at least one zone identifier (ZID) for identifying a zone type.

3. Method according to Claim 1 or 2,
**characterized**
**in that** the information sent from the mobile radio network to the subscriber's mobile station contains cell identifiers (CID) for identifying the radio cells and/or area identifiers (LAID) for identifying the location areas.

4. Method according to one of the preceding claims,
**characterized**
**in that** the mobile station (MS) confirms storage of the information sent from the mobile radio network to the subscriber's mobile station to the mobile radio network and in so doing returns the information stored for the subscriber.

5. Method according to one of the preceding claims,
**characterized**
**in that** the information is transmitted between the mobile radio network and the mobile station (MS) in signalling messages.

6. Method according to Claim 5,
**characterized**
**in that** the information is signalled between a short message service centre (SMSC) in the mobile radio network and the mobile station (MS) in one or more short messages (SM-MT) from a short message service.

7. Method according to one of the preceding claims,
**characterized**
**in that** the presence of the mobile station (MS) in one of the zones (HOZO, CIZO, OFZO) is displayed visually or communicated audibly on the mobile station.

8. Method according to one of the preceding claims,
**characterized**
**in that**, depending on whether or not the mobile station (MS) is located in one of the defined zones (HOZO, CIZO, OFZO), appropriate safety functions and/or call-related actions are supported by the mobile station and the mobile radio network when it is located in the zone and are not supported by them when it is not located in the zone.

9. Method according to one of the preceding claims,
**characterized**
**in that** when there are a plurality of nested zones (e.g. HOZO, CIZO) the zones with the relevant zone tariffs are prioritized for billing.

10. Method according to one of the preceding claims,
**characterized**
**in that** the zone tariff (e.g. THZ) associated with a defined zone comprises a basic tariff and a distance-dependent tariff which takes account of the locations of the calling subscriber and/or of the called subscriber.

11. Method according to one of the preceding claims,
**characterized**
**in that** the network requests and evaluates the information available in the mobile station (MS) and in the billing centre (BC) about the defined zones (HOZO, CIZO, OFZO) on a subscriber-specific basis for the respective mobile subscriber.

12. Method according to one of the preceding claims,
**characterized**
**in that** changes in the network structure relating to the radio cells (e.g. C1...C6) and/or the location areas (e.g. LA1...LA4) are taken into account in the network and new information for flagging the zones (e.g. HOZO, CIZO) affected by the changes for the respective mobile subscribers is entered in the network database (IC) and in the billing centre (BC).

13. Method according to Claim 12,
**characterized**
**in that** the new information is sent to the mobile station (MS) and is stored on the mobile station.

14. Method according to Claim 11, 12 or 13,
**characterized**
**in that** the information is signalled between a short message service centre (SMSC) in the mobile radio network and the mobile station (MS) in one or more short messages (SM-MT) from a short message service.

## Revendications

1. Procédé pour la taxation d'appels, qui peuvent être émis par des stations mobiles (MS) d'abonnés mobiles et reçus de ces mêmes stations, dans un réseau de téléphonie mobile comprenant
- une structure de réseau cellulaire construite à base de cellules radio et
- des équipements radio (BSS) pour l'émission et la réception d'informations de signalisation et d'informations utiles à destination et en provenance des stations mobiles (MS),
- des équipements de commutation (MSC) pour la connexion de liaisons de signalisation et de liaisons utiles,
- des équipements de stockage (HLR) pour le stockage de données d'abonné des abonnés mobiles et
- un dispositif de taxation (BC) pour l'enregistrement d'ensembles de données spécifiques aux appels et pour la détermination de la taxe d'appel spécifique en fonction des ensembles de données,
des cellules radio (C1...C6) et/ou des zones de séjour (LA1...LA4) étant regroupées dans le procédé pour former une ou plusieurs zones (HOZO, CIZO, OFZO) et des tarifs de zone (THZ, TCZ, TOZ) étant attribués aux zones (HOZO, CIZO, OFZO),
**caractérisé en ce que**,
- les zones (HOZO, CIZO, OFZO) sont définies pour l'abonné mobile à chaque fois de façon individuelle par abonné,
- **en ce que** les zones (HOZO, CIZO, OFZO) à aménager pour l'abonné mobile sont initialisées à distance par l'abonné concerné même par le fait que, au moyen de sa station mobile, qui se trouve à l'emplacement géographique respectif des zones, il définit en dialogue avec le réseau de téléphonique mobile les cellules radio et/ou zones de séjour de ses zones souhaitées par des entrées dans la station mobile (MS),
- **en ce que** le dispositif de taxation (BC) reçoit à chaque fois des informations mises à disposition par une base de données utiles (IC) sur les zones (HOZO, CIZO, OFZO) et les tarifs de zone (THZ, TCZ, TOZ) définies individuellement pour l'abonné mobile et ces informations sont utilisées en cas de séjour de l'abonné mobile dans l'une des zones (HOZO, CIZO, OFZO) pour déterminer la taxe d'appel respective,
- **en ce que** des informations sur les zones (HOZO, CIZO, OFZO), définies pour l'abonné mobile sont envoyées du réseau de téléphonie mobile à la station mobile (MS) de l'abonné et sont stockées à la station mobile ou dans un module d'identité d'abonné (SIM) de la station mobile, et
- **en ce que** la station mobile (MS) vérifie avec les informations stockées côté station, mobile par comparaison d'informations reçues par l'air, qui permettent une localisation de la station mobile (MS) dans une cellule radio (par exemple C3) identifiable ou dans une zone de séjour identifiable (par exemple LA2), si elle séjourne dans l'une des zones (HOZO, CIZO, OFZO), définies pour l'abonné mobile, le contrôle s'effectuant dès que la station mobile (MS) s'inscrit dans le réseau de téléphonie mobile.

2. Procédé selon la revendication 1,
**caractérisé en ce que**
les informations envoyées du réseau de téléphonie mobile à la station mobile de l'abonné contiennent au moins un code de zone (ZID) pour l'identification d'un type de zone.

3. Procédé selon la revendication 1 ou 2,
**caractérisé en ce que**
les informations envoyées du réseau de téléphonie mobile à la station mobile de l'abonné contiennent des codes de cellule (CID) pour l'identification des cellules radio et/ou des codes de zone (LAID) pour l'identification des zones de séjour.

4. Procédé selon l'une quelconque des revendications précédentes,
**caractérisé en ce que**
le stockage des informations envoyées du réseau de téléphonie mobile à la station mobile de l'abonné est confirmé par la station mobile (MS) et les informations stockées pour l'abonné sont alors renvoyées.

5. Procédé selon l'une quelconque des revendications précédentes,
**caractérisé en ce que**
les informations sont transmises entre le réseau de téléphonie mobile et la station mobile (MS) dans des messages de signalisation.

6. Procédé selon la revendication 5,
**caractérisé en ce que**
les informations entre un dispositif de service de messages courts (SMSC) du réseau de téléphonie mobile et la station mobile (MS) sont signalées dans un ou plusieurs messages courts (SM-MT) du service de messages courts.

7. Procédé selon l'une quelconque des revendications précédentes,
**caractérisé en ce que**
le séjour de la station mobile (MS) dans l'une des zones (HOZO, CIZO, OFZO) est affiché visuellement à la station mobile ou signalé de façon acoustique.

8. Procédé selon l'une quelconque des revendications précédentes,
**caractérisé en ce que**,
selon que la station mobile (MS) séjourne ou ne séjourne pas dans l'une des zones définies (HOZO, CIZO, OFZO), des fonctions de sécurité appropriées et/ou des actions spécifiques à l'appel sont supportées par la station mobile et le réseau de téléphonie mobile en cas de séjour dans la zone ou ne sont pas supportées en cas d'absence dans la zone.

9. Procédé selon l'une quelconque des revendications précédentes,
**caractérisé en ce que**,
dans le cas de plusieurs zones situées les unes dans les autres (par exemple HOZO, CIZO), on a une mise en priorité des zones avec les tarifs de zone correspondants pour la taxation.

10. Procédé selon l'une quelconque des revendications précédentes,
**caractérisé en ce que**
le tarif de zone attribué à une zone définie (par exemple THZ) comprend un tarif de base et un tarif dépendant de la distance, qui prend en compte les séjours de l'abonné appelant et/ou de l'abonné appelé.

11. Procédé selon l'une quelconque des revendications précédentes,
**caractérisé en ce que**,
côté réseau, les informations présentes dans la station mobile (MS) et dans le dispositif de taxation (BC) sur les zones définies (HOZO, CIZO, OFZO) sont demandées et analysées de façon spécifique à l'abonné pour l'abonné mobile concerné.

12. Procédé selon l'une quelconque des revendications précédentes,
**caractérisé en ce que**
les modifications de la structure de réseau par rapport aux cellules radio (par exemple C1...C6) et/ou aux zones de séjour (par exemple LA1...LA4) sont prises en compte côté réseau et de nouvelles informations sont reportées pour le marquage des zones concernées par les modifications (par exemple HOZO, CIZO) pour les abonnés mobiles concernés dans la base de données de réseau (IC) et dans le dispositif de taxation (BC).

13. Procédé selon la revendication 12,
**caractérisé en ce que**
les nouvelles informations sont envoyées à la station mobile (MS) et sont stockées côté station mobile.

14. Procédé selon la revendication 11, 12 ou 13
**caractérisé en ce que**
les informations sont signalées entre un dispositif de service de messages courts (SMSC) du réseau de téléphonie mobile et la station mobile (MS) dans un ou plusieurs messages courts (SM-MT) d'un service de messages courts.
